(19) **Europäisches Patentamt**
**European Patent Office**
**Office européen des brevets**

(11) Veröffentlichungsnummer: **0 282 877 B1**

## (12) EUROPÄISCHE PATENTSCHRIFT

(45) Veröffentlichungstag der Patentschrift: **18.12.91**

(51) Int. Cl.⁵: **G11B 20/18**, G06F 3/06

(21) Anmeldenummer: **88103633.9**

(22) Anmeldetag: **08.03.88**

(54) **Verfahren und Einrichtung zur Steuerung der Fehlerkorrektur innerhalb einer Datenübertragungssteuerung bei von bewegten peripheren Speichern, insbesondere Plattenspeichern, eines Datenverarbeitungssystems gelesenen Daten.**

(30) Priorität: **10.03.87 DE 3707680**

(43) Veröffentlichungstag der Anmeldung:
**21.09.88 Patentblatt 88/38**

(45) Bekanntmachung des Hinweises auf die Patenterteilung:
**18.12.91 Patentblatt 91/51**

(84) Benannte Vertragsstaaten:
**AT BE CH DE FR GB IT LI LU NL SE**

(56) Entgegenhaltungen:
**DE-A- 3 422 461**
**US-A- 4 455 655**
**US-A- 4 637 023**

**IBM TECHNICAL DISCLOSURE BULLETIN, Band 20, Nr. 7, Dezember 1977, Seite 2580, New York, US; E.W. DEVORE et al.: "Intermediate status"**

**PATENT ABSTRACTS OF JAPAN, Band 9, Nr. 79 (P-347)[1802], 9. April 1985; & JP-A-59 210 511 (NIPPON DENKI K.K.) 29-11-1984**

**PATENT ABSTRACTS OF JAPAN, Band 9, Nr.**

**79 (P-347)[1802], 9. April 1985; & JP-A-59 210 510 (NIPPON DENKI K.K.) 29-11-1984**

**WESCON TECHNICAL PAPERS, Band 27, 1983, Seiten 1-9, North Hollywood, US; M. EVANS et al.: "A high performance cost effective disk chip set"**

(73) Patentinhaber: **Siemens Nixdorf Informationssysteme AG**
**Otto-Hahn-Ring 6**
**W-8000 München 83(DE)**

(72) Erfinder: **Weiss, Eckardt, Ing. grad.**
**Bernhard Lichtenberg Weg 20**
**W-8000 München 81(DE)**
Erfinder: **Wentzel, Peter**
**Eupenstrasse 12**
**W-8900 Augsburg 43(DE)**

(74) Vertreter: **Fuchs, Franz-Josef, Dr.-Ing. et al**
**Postfach 22 13 17**
**W-8000 München 22(DE)**

## Beschreibung

Verfahren und Einrichtung Zur Steuerung des Datenflusses in Schnittstellen-Controllern für bewegte periphere Speicher, insbesondere Plattenspeicher, in Datenverarbeitungsanlagen

Die Erfindung betrifft ein Verfahren und eine Einrichtung zur Steuerung des Datenflusses in Schnittstellen-Controllern zum Anschluß von bewegten peripheren Speichern, insbesondere Plattenspeicher, an die Ein-/Ausgabekanäle einer Datenverarbeitungsanlage entsprechend dem Oberbegriff des Patentanspruches 1.

Periphere Speicher, wie zum Beispiel Plattenspeicher, eines Datenverarbeitungssystems werden in der Regel durch vorgeschaltete Datenübertragungssteuerungen oder sogenannte Controller gesteuert, die die Verbindung mit den Ein-/Ausgabekanälen der Datenverarbeitungsanlage herstellen. Um die Zusammenarbeit zwischen den Ein-/Ausgabekanälen und den verschiedenen peripheren Speichern zu erleichtern und anpassungsfähiger zu gestalten, sind verschiedene Schnittstellen auf dem Wege zwischen den Ein-/ Ausgabekanälen und den peripheren Speichern geschaffen und teilweise zu Standards erhoben worden - man siehe zum Beispiel "MINI-MICRO SYSTEMS" Feb.1985, Seiten 135 bis 144 und "Computer Design", Jan.15,1986, Seiten 57 bis 70.

Andererseits erfordert die hohe Speicherdichte moderner peripherer Speicher eine ausreichende Sicherung der Daten mit fehlerkorrigierenden Codes, um eine ausreichende Datenübertragungsleistung zu sichern. Die Daten werden dabei in der Regel in Blöcke oder Datenfelder aufgeteilt, die unterschiedlich lang sein können, und jeder Block wird beim Schreiben durch dem gewählten Fehlerkorrekturcode entsprechende Sicherungszeichen ergänzt. Beim Lesen der Blöcke werden die Sicherungszeichen dann erneut gebildet und mit den mitgeführten Sicherungszeichen verglichen. Stimmen die Sicherungszeichen nicht überein, weil die Daten verfälscht worden sind, wird ein Fehlersyndrom ermittelt, aus dem dann die Korrekturgrößen zur Korrektur der fehlerbehafteten Daten berechnet werden können. Abhängig vom Umfang der jeweils abzusichernden maximalen Datenmenge und dem Umfang der Korrigierbarkeit von Fehlern verursacht jeder Fehler einen mehr oder minder starken Zeitverzug, bis gelesene fehlerhafte Daten korrigiert sind und weitergeleitet werden können. Die Sicherung der zu speichernden Daten und deren Überwachung und Korrektur beim Lesen ist gleichfalls Aufgabe der Controller.

Bei einem bekannten Controller für Disketten arbeiten zwei Datenpuffer im Wechselspiel, deren Kapazität der maximalen Blocklänge von 512 Bytes entspricht. Während in den einen Datenpuffer gelesen wird, werden die Daten im anderen Datenpuffer an das übergeordnete System weitergeleitet. Wird ein Fehler festgestellt, wird das Lesen eines weiteren Blockes unterbunden und der fehlerhafte Block zunächst korrigiert - man siehe zum Beispiel "Electronic Design", Okt 3, 1985, Seiten 105 bis 111.

Da eine Korrektur allgemein mehr Zeit erfordert, als das Erreichen des nachfolgenden Blockanfanges, muß nach jedem gestörten Block eine volle Umdrehung der Speicherplatte abgewartet werden, um den nachfolgenden Block lesen zu können. Die dadurch bedingten Verlustzeiten fallen umso stärker ins Gewicht, je größer die Anzahl, z.B. 64 Kbyte, der mit einem Lesebefehl zu lesenden Blöcke ist.

Zur Lösung dieses Problems sind aus der US-PS 4 455 655 zwei Anordnungen bekannt, die zugleich eine ununterbrochene Weiterleitung der gelesenen Daten zum angeschlossenen System ermöglichen. Bei der einen Anordnung sind drei Pufferspeicher für jeweils einen Datenblock vorgesehen. Die gelesenen Datenblöcke werden dabei abwechselnd einem ersten und einem zweiten Pufferspeicher zugeführt. Parallel dazu ermittelt ein linear rückgekoppeltes Schieberegister zu jedem gelesenen und zwischengespeicherten Datenblock das mögliche Fehlersyndrom, anhand dessen der Datenblock anschließend aus einem Pufferspeicher heraus durch die Korrektureinrichtung korrigiert und an einen Ausgangspufferspeicher übergeben wird, während in den anderen Pufferspeicher der nachfolgend gelesene Datenblock eingegeben und korrigiert von dort über den Ausgangspufferspeicher an die Datenverarbeitungsanlage weitergeleitet wird.

Die andere bekannte Lösung verwendet zwei im Wechsel betriebene linear rückgekoppelte Schieberegister zur Korrektur eines Datenblockes mit gemeinsamen Ausgangspuffer für die Weiterleitung.

Beide Anordnungen vermeiden zwar eine Leseunterbrechung mit den damit verbundenen Verlustzeiten für das Auffinden des jeweils nachfolgenden Datenblockes auf dem peripheren Speicher und sichern gleichzeitig die Weiterleitung von im Echtzeitbetrieb korrigierten Daten an die angeschlossene Datenverarbeitungsanlage in ununterbrochener Folge. Dies erfordert aber die Einhaltung sehr enger Zeitbedingungen, da die Korrektur eines verfälschten Datenblockes abgeschlossen und dieser weitergeleitet sein muß, wenn der jeweils übernächste nachfolgende Datenblock eintrifft. Die Datenübertragungsgeschwindigkeiten und die Art der Sicherung und Korrektur müssen daher aufeinander abgestimmt sein, was den Freiheitsgrad bei der Entwicklung und Gestaltung neuer Geräte und Systeme erheblich einschränkt.

Aufgabe der Erfindung ist es daher, den Datenfluß in den Schnittstellen-Controllern so zu steuern, daß ein möglichst großer Freiheitsgrad bezüglich der Wahl des Sicherungsverfahrens und der Korrektur sowie der möglichen Übertragungsgeschwindigkeiten gegeben ist.

Diese Aufgabe wird für das Verfahren gemäß der Erfindung durch die kennzeichnenden Merkmale des Patentanspruches 1 gelöst. Danach wird mit einem einzigen, aber wesentlich größeren Datenpufferspeicher gearbeitet, der alle von einem Lesebefehl erfaßten Datenblöcke aufnehmen kann. Diese Datenblöcke werden in einem Zug ohne Unterbrechung gelesen und übernommen, unabhängig davon, ob Fehler vorliegen oder nicht.

Parallel zur Übernahme der Lesedaten in den Datenpufferspeicher werden die Daten, wie auch bisher üblich, auf das Vorliegen von Fehlern kontrolliert und die Fehlersyndrome generiert. Jedoch wird bei einem erkannten Fehler der Lesevorgang - wie bei der einen bekannten Lösung - nicht mehr abgebrochen und zunächst der zugehörige Block korrigiert, damit er weitergeleitet werden kann, sondern die ermittelten Fehlersyndrome werden ebenfalls zwischengespeichert und die Korrektur damit auf einen späteren günstigeren Zeitpunkt verschoben. Damit wird im Gegensatz zu den anderen bekannten Lösungen die Weiterleitung der Daten zum übergeordneten System vom eigentlichen Lesevorgang vollständig entkoppelt. Analoges gilt für den Schreibvorgang. Folglich können beidseitig vom Schnittstellen-Controller Systeme mit den unterschiedlichsten Übertragungsgeschwindigkeiten verwendet werden, und die Art der Sicherung und Korrektur der Daten ist frei von einengenden Zeitbedingungen.

Weiterbildungen der Erfindung entsprechend den Ansprüchen 2 bis 9 beziehen sich auf den Zeitpunkt der Berechnung der Korrekturgrößen und der Korrekturdurchführung, auf das Zusammenwirken von Pufferspeicher und Sicherungs- und Korrektureinrichtung wie auf die Zwischenspeicherung der Fehlersyndrome.

Die wesentlichen Merkmale einer Einrichtung gemäß der Erfindung ergeben sich aus Anspruch 10, wonach neben dem vergrößerten Pufferspeicher für die Daten ein weiterer Pufferspeicher für die Fehlersyndrome und Einrichtungen zur Erzeugung der notwendigen Steuersignale erforderlich sind. Zweckmäßige Weiterbildungen beinhalten die Ansprüche 11 und 12, wonach der Datenpufferspeicher getrennte Lese- und Schreibsteuerungen für die Durchführung sich überlappender Lese- und Schreibzugriffe aufweist und die Sicherungs- und Korrektureinrichtung aus unabhängigen Einrichtungen für die Ermittlung von Fehlersyndromen und für die Durchführung von Fehlerkorrekturen anhand der Fehlersyndrome besteht.

Einzelheiten der Erfindung seien nachfolgend anhand von in der Zeichnung dargestellten Ausführungsbeispielen näher erläutert. Im einzelnen zeigen

FIG 1 ein Blockschaltbild für eine Plattenspeichersteuerung mit ihren standardisierten Schnittstellen,

FIG 2 ein Prinzipschaltbild des Pufferspeichers und der Sicherungs- und Korrektureinrichtung von FIG 1 und

FIG 3 ein Blockschaltbild einer Plattenspeichersteuerung in Anlehnung an das von FIG 1 bei Verwendung einer speicherprogrammierten Ablaufsteuerung für die übrigen Funktionsmodule.

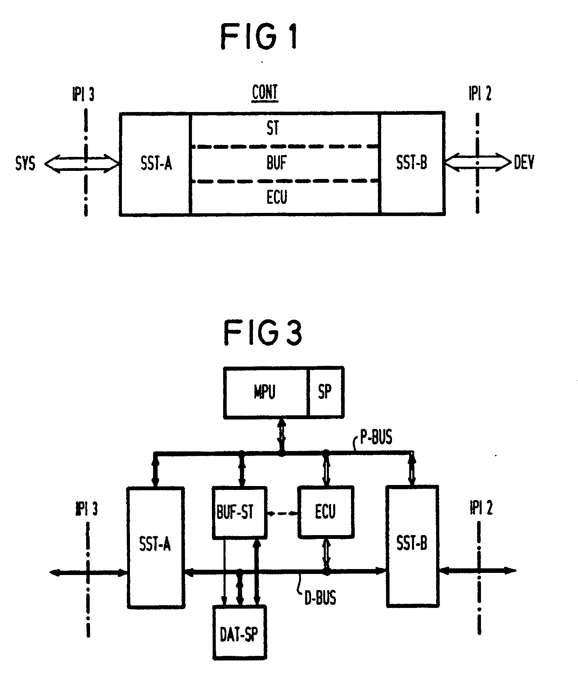

FIG 1 zeigt in Anlehnung an die Abbildung auf Seite 70 von "Computer Design", Jan.15,1986 das Blockschaltbild einer Plattenspeichersteuerung CONT, die über die eine standardisierte Schnittstelle IPI3 an das übergeordnete Datenverarbeitungssystem SYS angeschlossen ist, während über die andere standardisierte Schnittstelle IPI2 die peripheren Speicher angesteuert werden. Die Ankopplung an diese Schnittstellen bewirken jeweils entsprechend ausgebildete Schnittstellenbausteine SST-A und SST-B, die über einen Steuerteil ST miteinander verbunden sind. Mit diesem Steuerteil ST und den beiden Schnittstellenbausteinen SST-A und SST-B ist des weiteren eine Pufferspeichereinrichtung BUF für die in der einen oder anderen Richtung zu übertragenden Daten mit einer Sicherungs- und Korrektureinrichtung ECU gekoppelt.

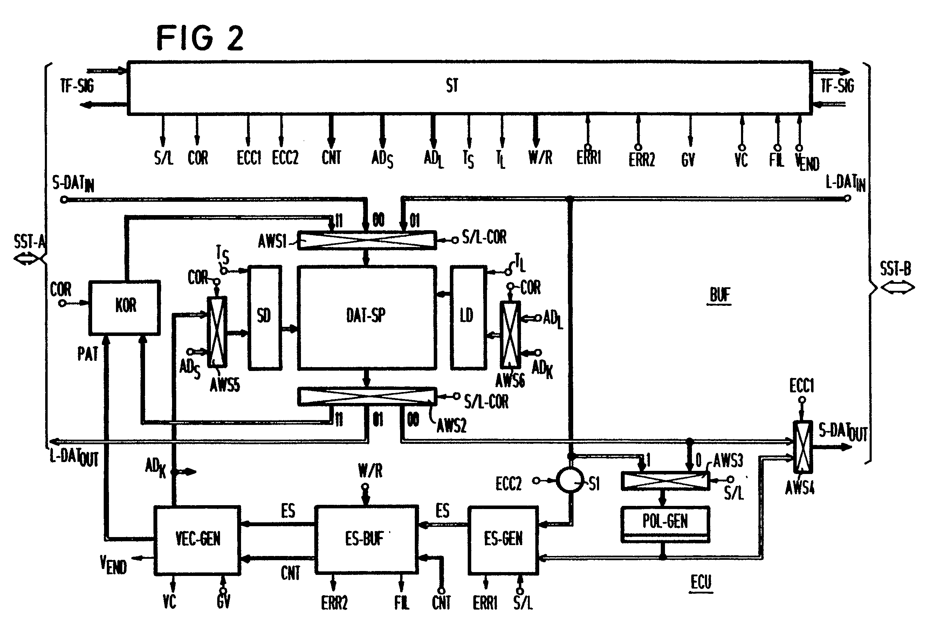

FIG 2 zeigt in Form eines Blockschaltbildes den Aufbau der Pufferspeichereinrichtung BUF und der Sicherungs- und Korrektureinrichtung ECU sowie deren Zusammenwirken gemäß der Erfindung in Abhängigkeit von Steuersignalen des Steuerteils ST. Kernstück der Pufferspeichereinrichtung BUF für die Daten ist der Speicher DAT-SP, der über den Auswahlschalter AWS1 zum Einschreiben von in beiden Richtungen zu übertragenden Daten ansteuerbar ist, wobei die Schreibsteuerung SD abhängig von zugeführten Adressen $AD_S$ und Schreibtaktsignalen $T_S$ das Einschreiben in einen vorgegebenen Speicherabschnitt steuert. In gleicher Weise können im Speicher DAT-SP zwischengespeicherte Daten in Verbindung mit der Lesesteuerung LD abhängig von Leseadressen $AD_L$ und Lesesignalen $T_L$ aus einem vorgegebenen Speicherabschnitt ausgelesen und über den Auswahlschalter AWS2 an drei verschiedene Datenleitungswege abgegeben werden.

Die Auswahlschalter AWS1 und AWS2 werden durch die vom Steuteil ST gelieferten Steuersignale S/L und COR eingestellt. Mit den Signalen S/L = 0 und COR = 0 werden zum Beispiel vom System SYS über den Schnittstellenbaustein SST-A angelieferte Daten $S\text{-}DAT_{IN}$ in den Speicher DAT-SP eingeschrieben und aus diesem als Daten S-$DAT_{OUT}$ über den Schnittstellenbaustein SST-B an den Plattenspeicher weitergeleitet. Umgekehrt werden vom Plattenspeicher gelesene und über den Schnittstellenbaustein SST-B gelieferte Daten L-$DAT_{IN}$ mit den Einstellsignalen S/L = 1 und COR = 0 für die Auswahlschalter AWS1 und AWS2 in den Speicher DAT-SP übernommen und aus diesem als Daten L-$DAT_{OUT}$ über den Schnittstellenbaustein SST-A an das System weitergeleitet. Die dritte Einstellung der Auswahlschalter AWS1 und AWS2 mit dem Signal COR = 1 eröffnet einen Korrekturpfad über die Korrektureinrichtung KOR, so daß fehlerbehaftete Daten aus dem Datenspeicher DAT-SP ausgelesen und korrigiert wieder zurückgeschrieben werden können.

Mit den zum Plattenspeicher führenden Datenwegen ist die Sicherungs- und Korrektureinrichtung ECU gekoppelt. Diese besteht zum Beispiel aus einem Polynomgenerator POL-GEN, der aus den zugeführten Daten entsprechend dem zugrundegelegten Fehlerkorrekturcode die zugehörigen Sicherungszeichen für die jeweils zu sichernde Datenmenge generiert. Werden Daten zum Plattenspeicher gesendet, werden der abgehende Datenweg über den Auswahlschalter AWS3 mit dem Einstellsignal S/L = 0 an den Polynomgenerator POL-GEN angekoppelt und die generierten Sicherungszeichen mittels des Auswahlschalters AWS4 an die weitergeleiteten Daten S-$DAT_{OUT}$ angehängt, was durch das Steuersignal ECC1 bewirkt wird. In umgekehrter Übertragungsrichtung werden gelesene Daten L-$DAT_{IN}$ bei Einstellung des Auswahlschalters AWS3 mit dem Steuersignal S/L = 1 ebenfalls dem Polynomgenerator POL-GEN zugeleitet. Die in diesem Falle generierten Sicherungszeichen werden zusammen mit den von den Lesedaten abgezweigten Sicherungszeichen, die mit dem Steuersignal ECC2 am Schalter S1 verfügbar sind, dem Fehlersyndromgenerator ES-GEN zugeleitet. Dieser prüft in bekannter Weise, ob die gelesenen Daten fehlerbehaftet sind, und erzeugt gegebenenfalls ein Fehlersyndrom ES, das die Korrektur der festgestellten Fehler ermöglicht.

Dem Fehlersyndromgenerator ES-GEN ist in an sich bekannter Weise ein Vektorgenerator VEC-GEN zur Berechnung der Korrekturgrößen PAT für die einzelnen Datenbitstellen und $AD_K$ für die Kennzeichnung der jeweiligen Datenabschnitte innerhalb des jeweiligen Blockes, sowie eine Korrektureinrichtung KOR nachgeschaltet, so daß die jeweils betroffenen Datenabschnitte aus dem Speicher DAT-SP ausgewählt und zur Korrektur über die Korrektureinrichtung KOR geleitet und wieder in den Speicher zurückgeschrieben werden können. Die Adressenzuführung für die Schreib- und Lesesteuerungen SD bzw. LD erfolgt daher wegen der jeweils verschiedenen Adressenquellen über Auswahlschalter AWS5 und AWS6, die durch das während des Korrekturvorganges gültige Steuersignal COR = 1 umgeschaltet werden.

In weiterer Auswirkung der Erfindung ist zwischen dem Fehlersyndromgenerator ES-GEN und dem Vektorgenerator VEC-GEN ein Pufferspeicher ES-BUF für die ermittelten Fehlersyndrome ES vorgesehen, so daß bei einem festgestellten Fehler nicht, wie bisher üblich, sofort die Korrekturphase eingeleitet zu werden braucht, sondern diese auf einen späteren günstigeren Zeitpunkt verschoben werden kann.

Weil jedoch ein zwischengespeichertes Fehlersyndrom sich immer auf einen bestimmten Datenblock bezieht, muß in diesem Fall eine Zuordnungskennung CNT mit abgespeichert werden, die als Basisadresse dient, auf die die vom Vektorgenerator VEC-GEN errechneten Distanzadressen aufsetzen können, um die eigentliche Adresse $AD_K$ für die einzelnen im Speicher DAT-SP zu korrigierenden Speicherabschnitte zu erhalten. Der Einfachheit halber ist diese Adressenmodifikation als in den Vektorgenerator VEC-GEN mit einbezogen dargestellt.

Der Arbeitsablauf für die Pufferspeichereinrichtung BUF und die Sicherungs- und Korrektureinrichtung ECU wird in an sich bekannter Weise durch Steuersignale und -Informationen des Steuerteils ST bestimmt, die in üblicher Weise von den angelieferten Transfersignalen und -informationen T-SIG abgeleitet werden. Es sind dies das Steuersignal S/L für Schreiben oder Lesen von Daten des Plattenspeichers, das die Übertragungsrichtung festlegt, die Schreib- oder Lesetakte $T_S$ bzw. $T_L$ und die damit verbundenen Adressen $AD_S$ bzw. $AD_L$ sowie die Steuersignale ECC1 und ECC2 für die Einblendung der Sicherungszeichen beim Schreiben und für das Ausblenden beim Lesen. Alle übrigen Steuersignale sind eine Auswirkung von festgestellten Fehlern.

Stellt der Fehlersyndromgenerator ES-GEN einen Fehler fest, indem er ein Fehlersyndrom ES ermittelt, dann meldet er das mit dem Signal ERR1 dem Steuerteil ST, das daraufhin zunächst mit einem Übernahmesignal W für den Pufferspeicher ES-BUF reagiert. Dessen Signal ERR2 zeigt wiederum an, daß wenigstens ein Fehlersyndrom ES zwischengespeichert ist. Ist der Pufferspeicher ES-BUF, der zweckmäßig als FIFO-Speicher ausgebildet ist, gefüllt, so kann zur Sicherheit ein Signal FIL erzeugt werden. Dies Signal kann dann in Verbindung mit einem erneuten Signal ERR1 des Fehlersyndromgenerators ES-GEN das Steuerteil ST veranlassen, den laufenden Lesevorgang zu unterbrechen, weil nachfolgende Fehlersyndrome nicht mehr zwischengespeichert werden können. Durch eine ausreichende Speicherkapazität für den Fehlersyndromspeicher ES-BUF aber kann ein solcher Betriebsfall ausgeschlossen werden.

Ist das Ende des Lesevorganges erreicht und liegt das Signal ERR2 vor, dann wird das erste zwischengespeicherte Fehlersyndrom ES aus dem Pufferspeicher ES-BUF mit dem Signal R an den Vektorgenerator VEG-GEN übergeben und dieser mit dem Signal GV zur Generierung der Korrekturgrößen veranlaßt, deren Vorliegen dem Steuerteil ST mit dem Signal VC gemeldet wird. Mit dem daraufhin vom Steuerteil ST ausgelösten Steuersignal COR wird dann auf die anschließende Korrekturphase umgesteuert.

Diese umfaßt in der Regel eine vorgegebene Anzahl von Lese-/Schreibzyklen für den Datenspeicher DAT-SP, um die zu korrigierenden Daten zu lesen und wieder zurückzuspeichern. Im anderen Falle kann ein zusätzliches Signal $V_{END}$ die Abarbeitung der Korrekturgrößen anzeigen. Nach Zurücksetzen des Signals COR wird bei Fortbestehen des Signals ERR2 der gesamte Korrekturvorgang mit dem nachfolgenden Fehlersyndrom wiederholt, bis alle zwischengespeicherten Fehlersyndrome verarbeitet sind. Das Verschwinden des Signals ERR2 zeigt dem Steuerteil ST schließlich an, daß alle fehlerhaften Daten im Speicher DAT-SP korrigiert sind und die zwischengespeicherten Daten der Reihe nach in einem kontinuierlichen Datenfluß weitergeleitet werden können, was durch die schrittweise fortgeschaltete Leseadresse $AD_L$ in Verbindung mit je einem Leseimpuls $T_L$ in bekannter Weise bewirkt wird. Ist der Datenspeicher DAT-SP geleert, steht der Controler für die Ausführung weiterer Schreib- oder Lesekommandos des übergeordneten Systems SYS zur Verfügung.

Im Vergleich zu den bekannten Lösungen wird also mit dem Signal ERR1 nicht der Lesevorgang für den nachfolgenden Datenblock unterbrochen und sofort der Korrekturvorang eingeleitet, sondern es wird lediglich ein Zwischenspeicherungssignal W für den Pufferspeicher ES-BUF ausgelöst. Neu in diesem Zusammenhang sind weiterhin die Steuersignale FIL, R, W und das normalerweise vom Signal ERR1 direkt abgeleitete Signal GV.

Die vorangehend beschriebene Arbeitsweise, erst alle Daten zu einem Lesebefehl zu lesen, dann nacheinander die Fehlersyndrome aufzubereiten und die fehlerhaften Daten zu korrigieren, bevor die Weiterleitung der zwischengespeicherten Daten eingeleitet wird, ist die am einfachsten zu steuernde Arbeitsweise. Sie ist insbesondere dann notwendig, wenn die einzelnen Einheiten der Sicherungs- und Korrektureinrichtung ECU nicht unabhängig voneinander arbeiten können, sondern als integraler Bestandteil mit Mehrfachausnutzung einiger Komponenten, zum Beispiel für die Ermittlung der Fehlersyndrome ES und der Korrekturgrößen PAT und $AD_K$ in einem einzigen Baustein zusammengefaßt sind. Jedoch ist es nicht erforderlich, mit der Weiterleitung der Daten zu warten, bis alle zwischengespeicherten Daten korrigiert sind. Es könnten, wenn das System es zuläßt, auch korrigierte Teilmengen jeweils weitergeleitet werden. Auch eine Trennung von Schreib- und Lesesteuerung SD und LD wäre in diesem Falle nicht erforderlich.

Die Verwendung eigenständiger Einheiten innerhalb der Sicherungs- und Korrektureinrichtung ECU, wie beim Ausführungsbeispiel von FIG 2 gezeigt, eröffnet dagegen die Möglichkeit zu einer weiteren Zeitersparnis, da die Berechnung der Korrekturgrößen durch den Vektorgenerator VEC-GEN ohne Unterbrechung des Lesevorganges sofort eingeleitet werden kann, wenn das erste Fehlersyndrom ES ermittelt ist. Man verkürzt dann den gesamten Zeitverzug bis zur Weiterleitung der Daten wenigstens um die dafür benötigte Zeit, wenn nicht der Lesevorgang bis zu diesem Zeitpunkt sowieso beendet ist.

Eine weitere Möglichkeit der Verringerung von Verlustzeiten ergäbe sich, wenn man die ermittelten Korrekturgrößen ebenfalls zwischenspeichern würde, beispielsweise anstelle des zugehörigen Fehlersyndroms ES im Pufferspeicher ES-BUF.

Andererseits könnte man auf eine solche Zwischenspeicherung bei entsprechenden Randbedingungen verzichten, wenn die normalerweise seriell vom Plattenspeicher gelesenen Daten portionsweise in Dateneinheiten von zum Beispiel 2 Byte Breite in eine entsprechende Paralleldarstellung überführt würden. Die damit verbundene Serien-Parallelwandlung kann an irgendeiner Stelle im Übertragungsweg zwischen dem Plattenspeicher und dem Eingang des Pufferspeichers DAT-SP vorgenommen werden. Mit Bezug auf das Ausführungsbeispiel von FIG 2 ist unterstellt, daß die Daten in einer solchen Paralleldarstellung angeliefert und weitergeleitet werden. Durch eine solche Parallelwandlung ergeben sich zwischen den einzelnen Zeiträumen für das Einschreiben der einzelnen Dateneinheiten in den Pufferspeicher DAT-SP Freizeiten, für einschiebbare Lese- und Schreibvorgänge zum Korrigieren fehlerbehafteter Daten anhand der vorliegenden Korrekturgrößen, was zudem durch getrennte Lese- und Schreibsteuerungen LS bzw. SD, wie sie beim Ausführungsbeispiel von FIG 2 vorgesehen sind, erleichtert würde.

FIG 3 zeigt einen gegenüber FIG 1 anders strukturierten Aufbau der Plattenspeichersteuerung, wie sie sich bei Verwendung einer speicherprogrammierten Ablaufsteuerung in Form eines Mikroprozessors MPU mit einem Arbeitsspeicher SP anbietet, der die Arbeit aller übrigen Funktionsmodule einschließlich der beiden Schnittstellenbausteine SST-A und SSTB kontrolliert und deren Zusammenarbeit koordiniert. Alle gezeigten Module mit Ausnahme des eigentlichen Datenspeichers DAT-SP, an dessen Stelle das zugehörige Steuermodul BUF-ST tritt, sind daher mit dem Mikroprozessor BPU über ein Prozessorleitungssystem P-BUS verbunden, während der Datenflußweg zwischen den Schnittstellenbausteinen SST-A und SST-B über ein gesondertes Datenleitungssystem D-BUS verläuft, an den der Pufferspeicher DAT-SP für die Daten angeschlossen ist und an den die Sicherungs- und Kontrolleinrichtung ECU ebenfalls angekoppelt ist. Die Bereitstellung von Adressen für den Datenspeicher DAT-SP erfolgt dabei ausschließlich über die Speichersteuerung BUF-ST, wobei ein Adressenaustausch zwischen dieser Steuerung und der Sicherungs- und Korrektureinrichtung ECU entweder über das Prozessorleitungssystem P-BUS oder aber, wie gestrichelt angedeutet, auf direktem Wege möglich ist.

Der Pufferspeicher für die Fehlersyndrome ES kann dabei in dem Modul der Sicherungs- und Kontrolleinrichtung ECU untergebracht sein. Eine andere Möglichkeit gemäß der Erfindung besteht darin, einen Teil des Arbeitsspeichers SP des Mikroprozessors MPU dafür zu nutzen, indem die Sicherungs- und Kontrolleinrichtung ECU jedes ermittelte Fehlersyndrom zusammen mit der Zuordnungskennung lediglich in einem Übergaberegister bereitstellt und die notwendige Übernahme über ein Statusregister dem Mikroprozessor MPU meldet.

Im übrigen gilt für die Steuerung der Fehlerüberwachung und -korrektur dasselbe wie für das Ausführungsbeispiel von FIG 2. Das gilt insbesondere für die Aufspaltung des einheitlichen Moduls ECU in zwei getrennte Module für die Ermittlung der Fehlersyndrome und für die Ermittlung der Korrekturgrößen.

## Patentansprüche

1. Verfahren zur Steuerung des Datenflusses in Schnittstellen-Controllern (CONT) zum Anschluß von bewegten peripheren Speichern, insbesondere Plattenspeicher (DEV), an die Ein-/Ausgabekanäle einer Datenverarbeitungsanlage (SYS), wobei an den peripheren Speicher (DEV) weiterzuleitende Daten in Blöcke unterteilt und jeweils durch ein Sicherungszeichen ergänzt werden, während vom Speicher (DEV) gelesene Daten zunächst in einen Pufferspeicher (BUF) übernommen und parallel dazu die Sicherungszeichen neu gebildet werden, um diese mit den mitgeführten Sicherungszeichen zu vergleichen und die gelesenen Daten auf Fehlerfreiheit zu prüfen, wobei als fehlerhaft erkannte Daten anhand des beim Vergleich der Sicherungszeichen gebildeten Fehlersyndroms (ES) zunächst korrigiert werden, bevor sie weitergeleitet werden, **dadurch gekennzeichnet,**

 - daß für die Daten ein Pufferspeicher (BUF) mit einer der durch einen Lesebefehl maximal abrufbaren Datenmenge entsprechenden Speicherkapazität verwendet wird,
 - daß alle aufgrund eines vorliegenden Lesebefehls zu lesenden Datenblöcke unabhängig von einem gegebenenfalls vorliegenden Datenfehler und ohne so fortige Weiterleitung bei Eintreffen des jeweils nachfolgenden Datenblockes nacheinander ohne Unterbrechung zunächst in den Pufferspeicher (BUF) übernommen werden und
 - daß die bei der Übernahme in den Pufferspeicher (BUF) ermittelten Fehlersyndrome (ES) mit einer Zuordnungskennung (CNT) für den jeweils zugehörigen Datenblock zunächst ebenfalls zwischengespeichert werden, bevor die Berechnung der Korrekturgrößen (PAT, $AD_K$) und damit die Korrektur der zwischengespeicherten Daten eingeleitet wird.

2. Verfahren nach Anspruch 1, **dadurch gekennzeichnet,** daß die Berechnung der Korrekturgrößen (PAT, $AD_K$) erst begonnen wird, wenn alle von einem Lesebefehl betroffenen Daten gelesen und zwischengespeichert sind.

3. Vefahren nach Anspruch 1, **dadurch gekennzeichnet,** daß die Berechnung der Korrekturgrößen (PAT, $AD_K$) bereits nach Vorliegen des ersten ermittelten Fehlersyndroms (ES) eingeleitet wird.

4. Verfahren nach Anspruch 2 oder 3, **dadurch gekennzeichnet,** daß die Korrektur fehlerhafter Daten unmittelbar nach Vorliegen der jeweiligen Korrekturgrößen (PAT, $AD_K$) erfolgt.

5. Verfahren nach Anspruch 3 oder 4, **dadurch gekennzeichnet,** daß bei in Paralleldarstellung überführten Dateneinheiten der seriell gelesenen Daten die Korrektur fehlerhafter Daten im Wechselspiel mit der Zwischenspeicherung weiterer gelesener Dateneinheiten erfolgt.

6. Verfahren nach einem der Ansprüche 1 bis 5, **dadurch gekennzeichnet,** daß bei in Teilmengen eines vorgegebenen Umfanges weiterzuleitenden Daten die Weiterleitung der jeweiligen Teilmenge nach Zwischenspeicherung aller Daten jeweils dann erfolgt, wenn die zugehörigen Daten einer Teilmenge im Pufferspeicher fehlerfrei bzw. korrigiert sind.

7. Verfahren nach einem der Ansprüche 1 bis 6 für Datenübertragungssteuerungen (CONT), in denen die Datenübertragung zum und vom bewegten Speicher (DEV) durch eine speicherprogrammierte Ablaufsteuerung (Mikroprozessor MPU mit Arbeitsspeicher SP) gesteuert wird, die als übergeordnete Steuerung die Arbeit der Schnittstellensteuerung (SST-A, SST-B) zum bewegten Speicher (DEV) und zum übergeordneten System (SYS), des Pufferspeichers (BUF) und der Sicherungs- und Korrektureinrichtung (ECU) als eigenständige Module kontrolliert und deren Zusammenarbeit koordiniert, **dadurch gekennzeichnet,** daß die Übertragung der Daten von einer der Schnittstellen (zum Beispiel SST-B) zum Pufferspeicher (BUF) und von diesem zur anderen Schnittstellensteuerung (SST-A) über ein vom Leitungssystem (P-BUS) der Ablaufsteuerung (MPU) unabhhängiges Datenleitungssystem (D-BUS) erfolgt und die Sicherungs- und Korrektureinrichtung (ECU) über dieses Datenleitungssystem (D-BUS) mit den zu kontrollierenden bzw. zu sichernden Daten gespeist wird, während Steuersignale und Adreßinformationen für die Korrektur der Daten mit dem Pufferspeicher (BUF) für die Daten direkt und/oder über das Leitungssystem (P-BUS) der Ablaufsteuerung (BPU) ausgetauscht werden.

8. Verfahren nach Anspruch 7, **dadurch gekennzeichnet,** daß die ermittelten Fehlersyndrome (ES) samt Zuordnungskennung (CNT) innerhalb der Sicherungs- und Korrektureinrichtung (ECU) zwischengespeichert werden.

9. Verfahren nach Anspruch 7, **dadurch gekennzeichnet,** daß die ermittelten Fehlersyndrome ·(ES) samt Zuordnungskennung (CNT) zwischenzeitlich in einem Übergaberegister jeweils gesichert und über das Leitungssystem (P-BUS) der Ablaufsteuerung (MPU) an den Arbeitsspeicher (SP) der Ablaufsteuerung (MPU) zur Zwischenspeicherung weitergeleitet werden, von wo sie zur Durchführung der Fehlerkorrektur wieder zur Sicherungs- und Korrektureinrichtung (ECU) zurückübertragen werden.

10. Einrichtung zur Durchführung der Verfahren nach einem der Ansprüche 1 bis 9 unter Verwendung eines Pufferspeichers (BUF) für die Aufnahme gelesener Datenblöcke sowie von Einrichtungen zur Neubildung der Sicherungszeichen eines jeden gelesenen Datenblockes, von Einrichtungen zum Vergleichen des neu gebildeten Sicherungszeichens mit den jeweils gelesenen zwecks Ermittlung eines Fehlersyndroms (ES) und von Einrichtungen zur Berechnung von Korrekturgrößen (PAT) anhand des jeweiligen Fehlersyndromes (ES) und zur Korrektur fehlerbehafteter Datenblöcke vor ihrer Weiterleitung, **gekennzeichnet**

- durch einen aus beiden Übertragungsrichtungen ansteuerbaren Pufferspeicher (BUF) mit einer der durch einen Lesebefehl maximal abrufbaren Datenmenge entsprechenden Speicherkapazität,
- durch einen Pufferspeicher (ES-BUF) zur Zwischenspeicherung der vom Fehlersyndrom-Generator (ES-GEN) ermittelten Fehlersyndrome (ES) mit einem Zuordnungskennzeichen (CNT) für den jeweils zugehörigen Datenblock in Verbindung mit Einrichtungen zur gesteuerten Weiterleitung an den Vektorgenerator (VEC-GEN) zur Erzeugung der Korrekturgrößen (PAT, $AD_K$) und
- durch Einrichtungen zur Erzeugung von die Zwischenspeicherung der Fehlersyndrome (ES) und deren Weiterverarbeitung steuernden Signalen (z.B. ERR1, W/R, FIL, ERR2, GV).

11. Einrichtung nach Anspruch 10, **dadurch gekennzeichnet,** daß der Pufferspeicher (BUF) für die zwischenzuspeichernden Daten unabhängig voneinander einstellbare Lese- und Schreibsteuerungen (LD und SD) für die Durchführung sich überlappender Lese- und Schreibzugriffe aufweist.

12. Einrichtung nach Anspruch 10 oder 11, **dadurch gekennzeichnet,** daß die Sicherungs- und Korrektureinrichtung (ECU) aus unabhängigen Einrichtungen (POL-GEN/ES-GEN und VEC-GEN/KOR) für die Ermittlung der Fehlersyndrome (ES) und für die Durchführung von Fehlerkorrekturen anhand der ermittelten Fehlersyndrome (ES) besteht.

**Claims**

1. Method for controlling the data flow in interface controllers (CONT) for the connection of moving peripheral stores, preferably disk stores (DEV), to the input/output channels of a data processing system (SYS), data to be forwarded to the peripheral store (DEV) being subdivided into blocks and supplemented in each case by a protection character, while data read from the store (DEV) are initially transferred into a buffer memory (BUF) and at the same time the protection characters are reformed, in order to compare them with the entrained protection characters and to check the data read for freedom from errors, data recognised as erroneous first being corrected, on the basis of the error syndrome (ES) formed in the comparison of the protection characters, before they are forwarded, characterised in that

- a buffer memory (BUF) having a storage capacity corresponding to the maximum quantity of data that can be called by a read instruction is used for the data,
- all data blocks to be read on the basis of an existing read instruction are initially transferred into the buffer memory (BUF) successively without interruption upon arrival of the respectively following data block, irrespective of whether data errors are present or not, and are not immediately forwarded, and
- the error syndromes (ES) determined in the transfer into the buffer memory (BUF) are likewise initially intermediately stored with an allocation identifier (CNT) for the respectively associated data block before calculation of the correction quantities (PAT, $AD_K$) and consequently the correction of the intermediately stored data is initiated.

2. Method according to Claim 1, characterised in that the calculation of the correction quantities (PAT, $AD_K$) is not commenced until all the data concerned by a read instruction have been read and intermediately stored.

3. Method according to Claim 1, characterised in that the calculation of the correction quantities (PAT, $AD_K$) is initiated already after the first determined error syndrome (ES) is available.

4. Method according to Claim 2 or 3, characterised in that the correction of erroneous data takes place immediately after the respective correction quantities (PAT, $AD_K$) are available.

5. Method according to Claim 3 or 4, characterised in that, in the case of data units of the data read in series transferred in parallel representation, the correction of erroneous data takes place in alternation with the intermediate storage of further read data units.

6. Method according to one of Claims 1 to 5, characterised in that, in the case of subsets of a given size of data to be forwarded, the forwarding of the respective subset after intermediate storage of all the data takes place in each case when the associated data of a subset in the buffer memory are error-free or have been corrected.

7. Method according to one of Claims 1 to 6 for data transfer controls (CONT), in which the data transfer to and from the moving store (DEV) is controlled by a stored-program executive sequencer (microprocesser MPU with main memory SP), which as primary control checks the work of the interface control (SST-A, SST-B) with respect to the moving store (DEV) and with respect to the higher-level system (SYS), of the buffer memory (BUF) and of the protection and correction means (ECU) as independent modules and coordinates their interaction, characterised in that the transfer of the data from one of the interfaces (for example SST-B) to the buffer memory (BUF) and from the latter to the other interface control (SST-A) takes place via a dataline system (D-BUS) independent of the line system (P-BUS) of the executive sequencer (MPU) and the protection and correction means (ECU) is fed via this dataline system (D-BUS) with the data to be checked or to be protected, while control signals and address information for the correction of the data are exchanged with the buffer memory (BUF) for the data directly and/or via the line system (P-BUS) of the executive sequencer (MPU).

8. Method according to Claim 7, characterised in that the determined error syndromes (ES) together with allocation identifier (CNT) are intermediately stored within the protection and correction means (ECU).

9. Method according to Claim 7, characterised in that the determined error syndromes (ES) together with allocation identifier (CNT) are in each case temporarily saved in a transfer register and are forwarded via the line system (P-BUS) of the executive sequencer (MPU) to the main memory (SP) of the executive sequencer (MPU) for intermediate storage, from where they are transferred back again to the protection and correction means (ECU) for carrying out error correction.

10. Apparatus for carrying out the methods according to one of Claims 1 to 9, using a buffer memory (BUF) for receiving data blocks which have been read as well as using means for reforming the protection characters of each and every data block read, using means for comparing the newly formed protection character with those read in each case, for the purpose of determining an error syndrome (ES), and using means for calculating correction quantities (PAT) on the basis of the respective error syndrome (ES) and for correcting erroneous data blocks before their forwarding, characterised by:

- a buffer memory (BUF) which can be activated from both transfer directions and having a storage capacity corresponding to the maximum quantity of data that can be called by a read instruction,
- a buffer memory (ES-BUF) for intermediate storage of the error syndromes (ES) determined by the error syndrome generator (ES-GEN) with an allocation identifier (CNT) for the respectively associated data block, together with means for controlled forwarding to the vector generator (VEC-GEN) for the generation of the correction quantities (PAT-AD$_K$) and
- means for generating signals (for example ERR1, W/R, FIL, ERR2, GV) controlling the intermediate storage of the error syndromes (ES) and their further processing.

11. Apparatus according to Claim 10, characterised in that the buffer memory (BUF) has read and write controls (LD and SD), which can be set independently of each other for the data to be intermediately stored, for carrying out overlapping read and write accesses.

12. Apparatus according to Claim 10 or 11, characterised in that the protection and correction means (ECU) comprises independent means (POL-GEN/ES-GEN and VEC-GEN/KOR) for determining the error syndromes (ES) and for carrying out error corrections on the basis of the error syndromes (ES) determined.

**Revendications**

1. Procédé pour commander le flux de données dans des dispositifs de commande d'interface (CONT) pour le raccordement de mémoires périphériques mobiles, notamment de mémoires à disques (DEV), aux canaux d'entrée/sortie d'une installation de traitement de données (SYS), et selon lequel des données devant être retransmises à la mémoire périphérique (DEV) sont subdivisées en blocs et sont complétées respectivement par un signe de protection, tandis que des données lues à partir de la mémoire (DEV) sont tout d'abord transférées dans une mémoire tampon (BUF) et, parallèlement à cela, les caractères de protection sont à nouveau formés, pour leur comparaison aux caractères de protection adjcints et le contrôle de l'absence d'erreurs dans les données lues, les données identifiées comme étant erronées étant tout d'abord corrigées sur la base du syndrome d'erreur (ES) formé lors de la comparaison des caractères de protection, avant que ces données soient retransmises,
caractérisé

- que pour les données, on utilise une mémoire tampon (BUF) possédant une capacité de mémoire correspondant à la quantité maximale de données pouvant être appelée par une instruction de lecture,
- que tous les blocs de données devant être lus sur la base d'une instruction de lecture présente sont transférés successivement sans interruption tout d'abord dans la mémoire tampon (BUF), indépendamment d'une erreur de données éventuellement présente et sans retransmission immédiate lors de l'arrivée du bloc de données respectivement suivant, et
- que les syndromes d'erreurs (ES) déterminés lors du transfert dans la mémoire tampon (BUF) sont tout d'abord également mémorisés temporairement avec un indicatif d'association (CNT) pour le bloc respectif de données associé, avant que le calcul des grandeurs de correction (PAT,AD$_K$) et par conséquent la correction des données mémorisées temporairement soient déclenchés.

2. Procédé suivant la revendication 1, caractérisé par le fait que le calcul des grandeurs de correction (PAT, AD$_K$) ne commence que lorsque toutes les données concernées par une instruction de lecture sont lues et mémorisées temporairement.

3. Procédé suivant la revendication 1, caractérisé par le fait que le calcul des grandeurs de correction (PAT, AD$_K$) est déclenché déjà avant l'apparition du premier syndrome d'erreur déterminé (ES).

4. Procédé suivant la revendication 2 ou 3, caractérisé par le fait que la correction de données erronées s'effectue directement après l'arrivée des grandeurs respectives de correction (PAT, AD$_K$).

5. Procédé suivant la revendication 3 ou 4, caractérisé par le fait que, dans le cas d'unités, converties selon une représentation en parallèle, des données lues en série, la correction des données erronées s'effectue alternativement avec la mémorisation temporaire d'autres unités de données lues.

6. Procédé suivant l'une des revendications 1 à 5, caractérisé par le fait que dans le cas de données devant être retransmises sous la forme de quantités partielles d'un ensemble prédéterminé, la retransmission de la quantité partielle respective s'effectue après mémorisation temporaire de toutes les données lorsque les données associées d'une quantité partielle présente dans la mémoire tampon ne comportent aucune erreur ou sont corrigées.

7. Procédé suivant l'une des revendications 1 à 6 pour des unités (CONT) de commande de transmission de données, dans lesquelles la transmission de données en direction et en provenance de la mémoire mobile (DEV) est commandée par une unité de commande d'exécution à programme mémorisé (microprocesseur MP comportant une mémoire de travail SP), qui, en tant qu'unité de commande de rang supérieur, contrôle le travail de l'unité de commande d'interface (SST-A, SST-B) utilisée pour le raccordement à la mémoire mobile (DEV) et au système de rang supérieur (SYS), de la mémoire tampon (BUF) et du dispositif de protection de correction (ECU), en tant que modules indépendants, et coordonne leur coopération, caractérisé par le fait que la transmission des données de l'une des interfaces (par exemple SST-B) à la mémoire tampon (BUF) et de cette mémoire en direction de l'autre unité de commande d'interfaces (SST-A) s'effectue par l'intermédiaire d'un système de lignes de transmission de données (D-BUS) indépendante du système de lignes (P-BUS) de l'unité de commande d'exécution (MPU) et que le dispositif de protection et de correction (ECU) est alimenté par l'intermédiaire de ce système de lignes de transmission de données (D-BUS), avec les données devant être contrôlées et protégées, tandis que des signaux de commande et des informations d'adresses pour la correction des données sont permutés directement avec la mémoire tampon (BUF) pour les données et/ou par l'intermédiaire du système de lignes (P-BUS) de l'unité de commande d'exécution (BPU).

8. Procédé suivant la revendication 7, caractérisé par le fait que les syndromes d'erreurs déterminés (ES) ainsi que l'indicatif d'association (CNT) sont mémorisés temporairement à l'intérieur du dispositif de protection et de correction (ECU).

9. Procédé suivant la revendication 7, caractérisé par le fait que les syndromes d'erreurs déterminés (ES) ainsi que l'indicatif d'association (CNT) sont protégés en étant insérés temporairement dans un registre de transfert et sont retransmis, pour leur mémorisation intermédiaire, par l'intermédiaire du système de lignes (P-BUS) de l'unité de commande d'exécution (MPU), à la mémoire de travail (SP) de cette unité (MPU), d'où ils sont à nouveau transmis en retour au dispositif de protection et de correction (ECU), pour l'exécution de la correction d'erreurs.

10. Dispositif pour la mise en oeuvre du procédé suivant l'une des revendications 1 à 9 moyennant l'utilisation d'une mémoire tampon (BUF) pour la réception de blocs de données lus ainsi que de dispositifs pour former à nouveau les signes de protection de chaque bloc de données lu, de dispositifs de comparaison du signe de sécurité nouvellement formé au signal de protection respectivement lu, pour la détermination d'un syndrome d'erreur (ES), et de dispositifs pour calculer des grandeurs de correction (PAT) en fonction du syndrome respectif d'erreur (ES) et pour la correction de blocs erronés de données avant leur retransmission, caractérisé
   - par une mémoire tampon (BUF) pouvant être commandée à partir des deux sens de transmission et possédant une capacité de mémoire correspondant à la quantité maximale de données pouvant être appelée par une instruction de lecture,
   - par une mémoire tampon (ES-BUF) pour la mémorisation temporaire de syndromes d'erreurs (ES) déterminés par le générateur de syndromes d'erreurs (ES-GEN) avec un indicatif d'association (CNT) pour le bloc respectivement associé de données, en liaison avec des dispositifs servant à réaliser la retransmission commandée en direction du générateur vectoriel (VEC-GEN) pour la production des grandeurs de correction (PAT,AD$_K$) et
   - par des dispositifs pour produire des signaux (par exemple ERR1, W/R, FIL, ERR2, GV) qui commandent la mémorisation temporaire des syndromes d'erreurs (ES) et leur retransmission.

11. Dispositif suivant la revendication 10, caractérisé par le fait que la mémoire tampon (BUF) comporte, pour les données devant être mémorisées temporairement, des unités de commande de lecture et d'enregistrement (LD et SD), qui peuvent être réglées indépendamment les unes des autres, pour la mise en oeuvre d'accès de lecture et d'accès d'enregistrement, en chevauchement.

12. Dispositif suivant la revendication 10 ou 11, caractérisé par le fait que le dispositif de protection et de correction (ECU) et constitué par des dispositifs indépendants (POL-GEN/ES-GEN est VEC-GEN/KOR) pour la détermination des syndromes d'erreurs (ES) et pour l'exécution de correction d'erreurs sur la base des syndromes d'erreurs déterminés (ES).

# FIG 1

# FIG 3

FIG 2